# EUROPEAN PATENT APPLICATION

(11) **EP 1 768 437 A2**
(43) Date of publication of application: **28.03.2007**
(21) Application number: 06019595.5
(22) Date of filing: 19.09.2006
(51) Int. Cl.: H04Q 7/38

(54) **System and method for group session communication**

(30) Priority: 26.09.2005 JP 2005278834
(71) Applicant: NEC Corporation, Minato-ku Tokyo (JP)
(72) Inventor: Inoue, Junichi, Tokyo (JP)
(74) Representative: Glawe, Delfs, Moll

(57) **Abstract**

The present invention is directed to a system and method for distributing voice data information as presence information to all members participating in the group session communication when the presence status of participants has changed. A call control server accepts a request from one of group members for joining or exiting the group session communication, and transmits the information on the member to a media control server. The media control server receives the information and extracts media data, from a memory means, corresponding to the received information, and distributes the extracted media data, as voice data, to all participants of the group session communication.

## Description

### BACKGROUND OF THE INVENTION

### FIELD OF THE INVENTION

The present invention relates to a Push to talk over Cellular (PoC), and more particularly to a system and method for group session communication that enable to distribute presence information by voice data information.

### DESCRIPTION OF THE RELATED ART

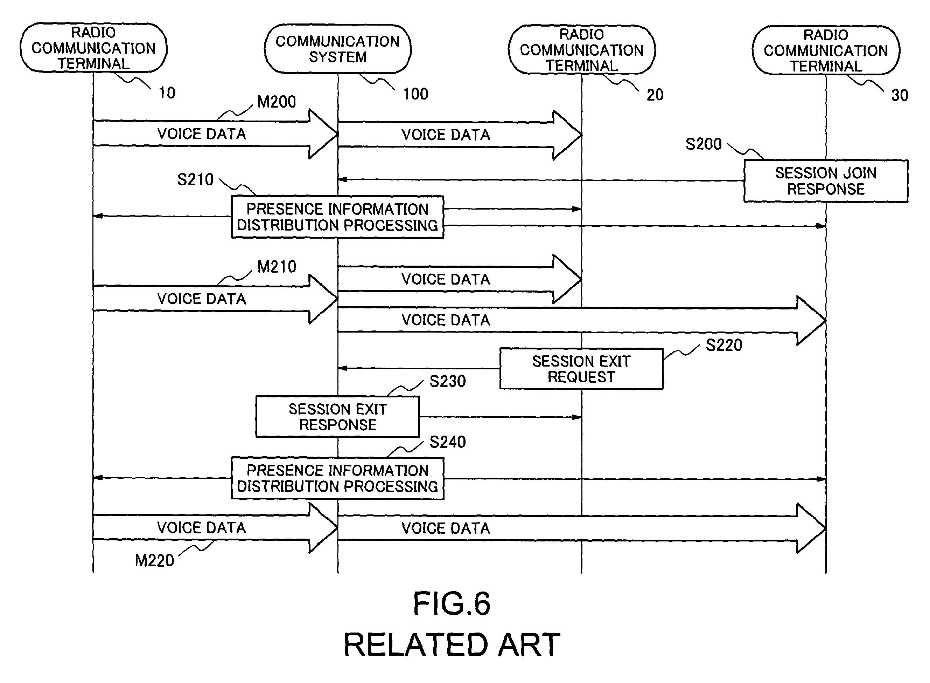

FIG. 6 is an example of a sequence chart illustrating how the group members (participants) of a group session communication recognize a newly joining member to this group session and an exited member from this group session during the group session communication using voice group communication in an existing Push to talk over Cellular (PoC) system. The group members are radio communication terminals 10 through 30, and the radio communication terminal 10 is assumed to have established the group session.

In the initial state, the radio communication terminals participating in the group session (group session members) are the radio communication terminal 10 and radio communication terminal 20, and the radio communication terminal 10, as a creator of the group sesion, is conducting voice communication with the radio communication terminal 20. The radio communication terminal 30 is receiving an invite signal from the radio communication terminal 10 via a communication system 100. However, the radio communication terminal 30 is not responding to this invite signal at this time point.

The voice signal that is input to the radio communication terminal 10 is transformed to voice data M200 and transmitted to the radio communication terminal 20 via the communication system 100.

Then, the radio communication terminal 30 sends back a join response (S200), responding to the invite request, transmitted from the radio communication terminal 10, to join this group session. Based on the join response transmitted from the radio communication terminal 30, the communication system 100 recognizes that the radio communication terminal 30 is a newly joining member to this group session. The communication system 100 notifies all the participants (the radio communication terminals 10 through 30) presence information (S210) that indicates "join" status, etc. to the group session of the radio communication terminals 10 through 30. Generally, the participants are required to confirm visually this presence information displayed on own radio communication terminal.

After the radio communication terminal 30 has joined the group session communication, voice data M210 generated by transforming the voice signal that is input to the radio communication terminal 10 are transmitted, via the communication system 100, to the radio communication terminal 20 and the newly joined radio communication terminal 30.

Next, a case in which the radio communication terminal 20 exits the group session is explained.

When the radio communication terminal 20 transmits an exit request (S220) from the group session communication, the communication system 100 receives this exit request and sends back to the radio communication terminal 20 an exit response (S230) from the group session communication. The communication system 100 then notifies the radio communication terminal 10 and the radio communication terminal 30 with presence information on the radio communication terminals 10 through 30 (S240). Upon receiving this notification, the radio communication terminal 10 and the radio communication terminal 30 recognize that the radio communication terminal 20 has exited the group session. The participants are also required to confirm visually this presence information displayed on the terminal.

After the radio communication terminal 20 has exited the group session, voice data M220 generated by transforming the voice signal that is input to the radio communication terminal 10 are transmitted, via the communication system 100, only to the radio communication terminal 30 who is the current participant of the group session.

The operations of the communication system as explained above, i.e., the conventional art related to the communication system that notifies other participants with increase and decrease of the number of the group session members is disclosed in Japanese Patent Laid-open No. 1992-290361.

In the existing communication system described above, information (terminal numbers, etc.) on the terminals joining the group session or the terminals exiting the group session is displayed on the terminals of all the participants of the group session. In the existing communication system, all the participants are notified with increase and decrease of the number of the group session members.

However, during the group session being established, the group session members are required to pay their attentions to visual signals transmitted from the speaker and documents related to the discussion. Consequently, it is possible for the group session members easily to pass over such presence information on the terminals joining the group session or exiting the group session.

Further, in a PoC using mobile terminals, during the group session communication, it is difficult for the group session members to watch the terminal display because they hold the mobile terminal at an ear for the communication. Thus, the group session members possibly pass over the displayed presence information.

As was described, the existing communication system has such a problem that it is difficult for the group session members to recognize the presence information which indicates increase and decrease of the number of the participants of the group session.

### SUMMARY OF THE INVENTION

The present invention has invented to solve the above described problem, and aims to provide a communication system which makes it easier for the group session members to recognize the presence information which indicates increase and decrease of the number of the participants of the group session communication.

According to the present invention, all participants of the group session communication can recognize the status change of participants by voice data information. The communication system according to the present invention comprises a call control server and a media control server. The call control server accepts a request from each of the group members for joining or exiting the group session communication. A predetermined number of communication terminals are defined as group members who organize a group of the group session communication. When the call control server has accepted the request from one of group members for joining or exiting the group session communication, the call control server transmits information on the group member to the media control server. The media control server extracts media data, from a memory means, corresponding to the information on the group member, and distributes the media data as voice data information to all group members participating in the group session communication.

According to the present invention, a communication system which makes it easier for the group members to recognize the presence information indicating increase and decrease of the number of the participants of the group session communication is realized.

### BRIEF DESCRIPTION OF THE DRAWINGS

The above and further objects, exemplary novel features and advantages of the present invention will be more fully understood from the following detailed description when read together with the accompanying drawings in which:
FIG. 1 is a diagram showing a communication system that relates to the present invention;
FIG. 2 is a diagram showing an example of the structure of the group attributes data;
FIG. 3 is a sequence chart showing an example of the operation of the communication system;
FIG. 4 is a sequence chart showing an example of the operation for a radio communication terminal newly joining the group session;
FIG. 5 is a sequence chart showing an example of the operation for a radio communication terminal exiting the group session; and
FIG. 6 is a sequence chart showing the operation of an existing communication system.

### DETAILED DESCRIPTION OF THE EXEMPLARY EMBODIMENTS

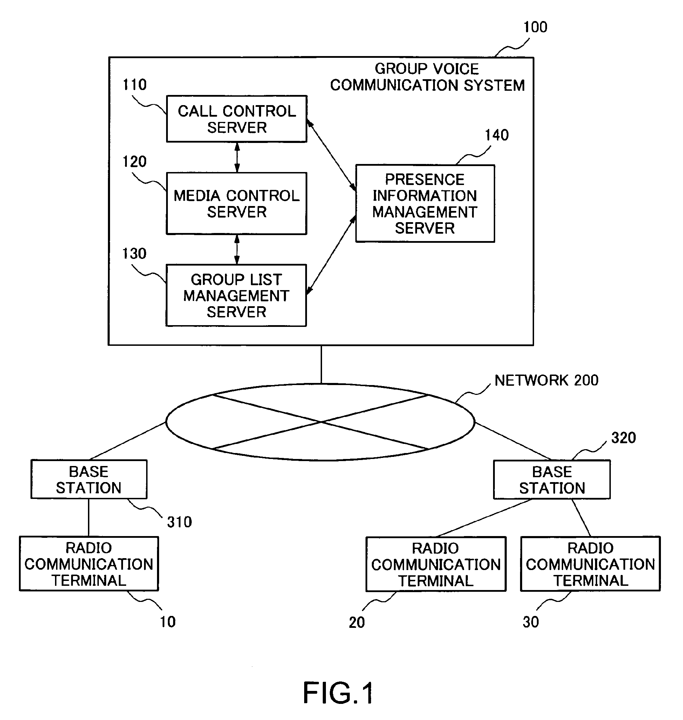

A preferred embodiment of the present invention is described below. FIG. 1 shows the structure of a communication system including a group voice communication system 100 of the present embodiment.

The group voice communication system 100 is connected to radio communication terminals 10, 20 and 30 through a network 200 and base stations 310 and 320. The group voice communication system 100 is a system that realizes group session communication represented by a PoC, and mainly performs call control, media control, group list management and presence information management related to group session communication.

Within the group voice communication system 100, a call control server 110 mainly performs call control for group session communication using voice group communication. The call control server 110 also performs routing among the radio communication terminals 10, 20 and 30, a media control server 120, a presence information management server 140, etc.

The media control server 120 mainly performs management and control for group session using voice group communication, distribution of voice media (which are media data distributed to the radio communication terminals currently participating the session to notify "join to the session" and "exit from the session"), or session member information.

The group list management server 130 mainly manages information related to the group and the members.

The presence information management server 140 mainly performs management and distribution of the presence information on the members. For example, the presence information server 140 performs unified management of member status such as "join to the session" or "exit from the session," or "conference in progress" and "out for lunch."

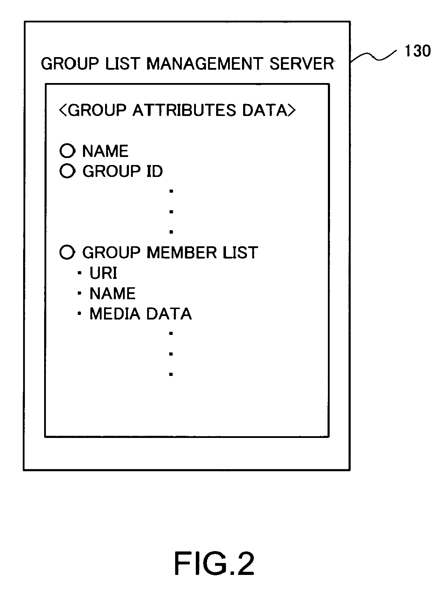

FIG. 2 shows an example of the data structure of the information on the group and the members that are managed by the group list management server 130.

The group member list information shown in FIG. 2 is defined by the manager of the group for each member. In the field of media data, a media type ("voice" in the present embodiment) which the media control server 120 can deal with, is stored.

The media data themselves (voice data) are pre-stored (memorized) in the media control server 120 by the manager of the group, and distributed to the group session members by the media control server 120.

Since the radio communication terminals 10 through 30, the network 200, base stations 310 and 320 according to the conventional art can be applied to the present embodiment, detailed explanation of the structure of these constituents is omitted.

In the following, operation for recognizing "join to" and "exit from" the session is explained which occur during the group session communication in the group voice communication system related to the present invention.

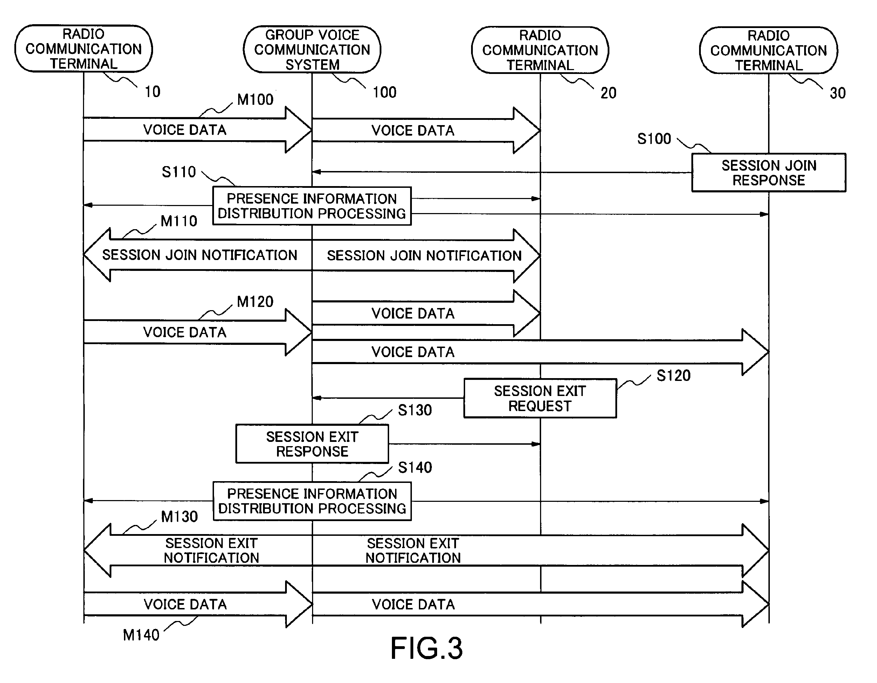

FIG. 3 is an example of the operation sequence.

In this example, the group session members are radio communication terminals 10 through 30. And the radio communication terminal 10 establishes the session. In the initial state, the radio communication terminal 10 and the radio communication terminal 20 are participants of the session. The radio communication terminal 10 is the speaker and is communicating with the radio communication terminal 20. Only the radio communication terminals 20 and 30 who are invited by the radio communication terminal 10 can join this session. Other radio communication terminals cannot join the session.

The voice signal that is input to the radio communication terminal 10 is transformed to voice data M100 and transmitted to the radio communication terminal 20 via the communication system 100.

The radio communication terminal 30 sends back a join response (S100), responding to the invite request to join this group session transmitted from the radio communication terminal 10. Then, based on the join response transmitted from the radio communication terminal 30, the communication system 100 recognizes that the radio communication terminal 30 is a newly joining member to this group session.

The presence information management server 140 of the communication system 100 notifies all the participants with presence information, in a visually recognizable form, that the radio communication terminal 30 has newly joined the session (S110).

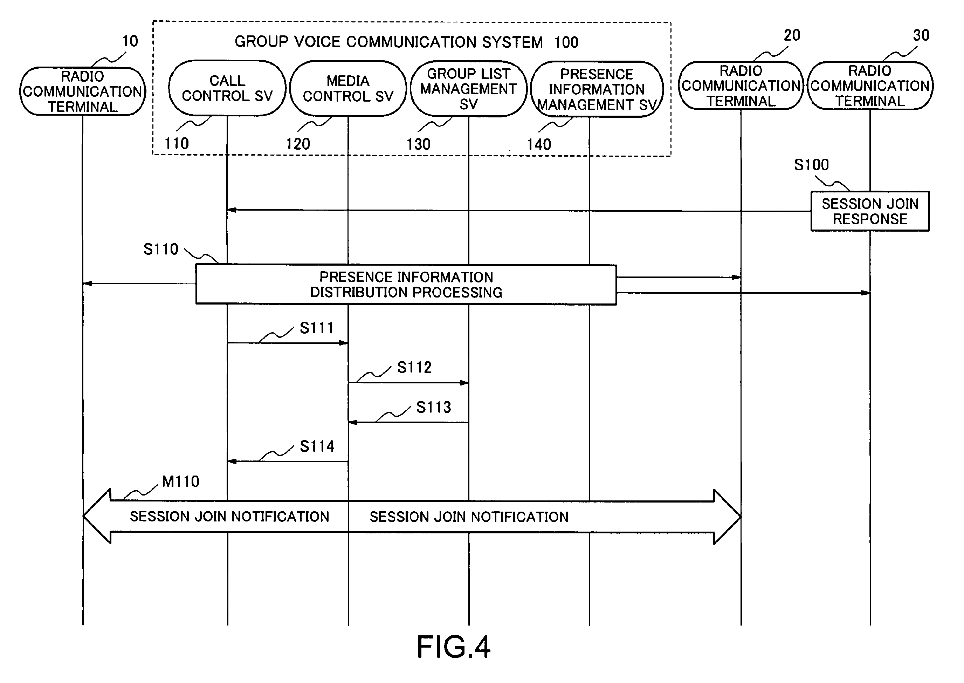

FIG. 4 shows the detailed operation within the group voice communication system 100 from the time when the radio communication terminal 30 transmits a session join response until the time when the media control server 120 outputs a session join notification as media data (voice data). In FIG. 4, "server" is denoted with abbreviation "SV."

The call control server 110 receives a session join response from the radio communication terminal 30 (S100). The call control server 110 acquires information on the newly joining member to the group session from the message presenting the session join response, and notifies the media control server 120 (S111).

The media control server 120 receives from the call control server 110 the information on the newly joining member to the session. Then, the media control server 120 transmits to the group list management server 130 an acquire request for information on the newly joining member as a group member (S112).

The group list management server 130, upon receiving the acquire request for information on the group member, finds information on the group member newly joining the session from within the group attributes data and responds to the media control server 120 (S113).

The media control server 120 receives the information on the group member responded from the group list management server 130. The media control server 120 confirms whether media data corresponding to the acquired information on the group member are stored or not, and responds to the call control server 110 with the information on the newly joining member to the group session (S114).

The media control server 120 also reads out the media data corresponding to the acquired information on the group member from a built-in memory or an externally attached memory device, and distributes this media data M110 (voice data) as a session join notification to the radio communication terminals 10 and 20 who are the current participants of the group session. For example, the media control server 120 distributes to the radio communication terminals 10 and 20, the current participants of the group session, such voice data as "The user Mr. A of the radio communication terminal 30 has joined the session" as a session join notification (M110).

While the radio communication terminal 10 and the radio communication terminal 20 are continuing group session communication, the users of both radio communication terminals recognize, by receiving the media data M110 from the group voice communication system 100, that the radio communication terminal 30 has joined the session. Now, the explanation continues with FIG. 3 again.

As the radio communication terminal 30 has joined the session, the voice signal that is input to the radio communication terminal 10 is transformed to voice data M120 and transmitted not only to the radio communication terminal 20 but also to the radio communication terminal 30.

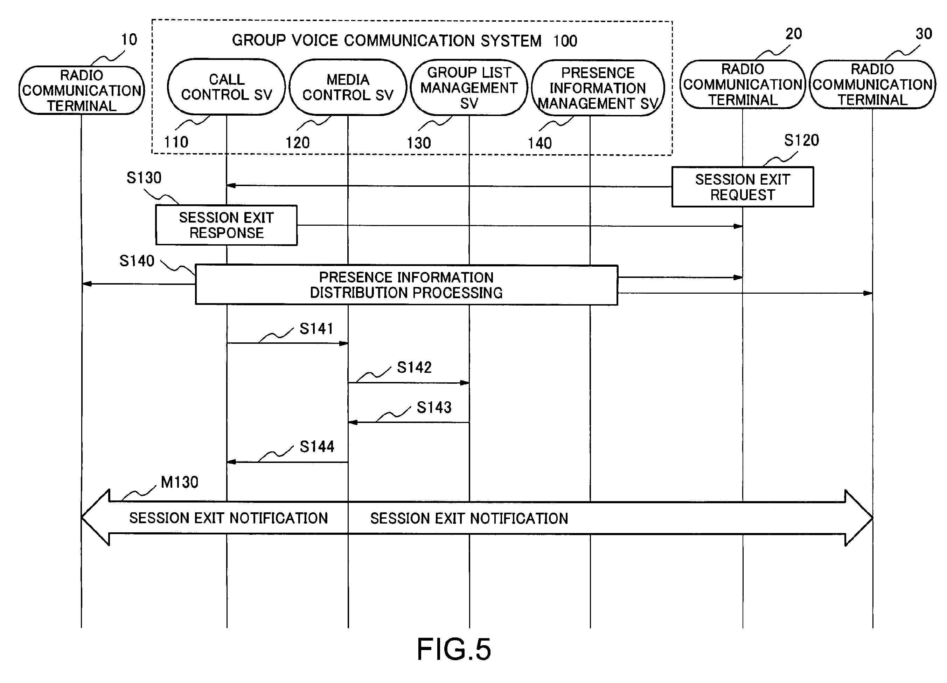

FIG. 5 shows the detailed operation within the group voice communication system 100 from the time when the radio communication terminal 20 transmits a session exit request until the time when the media control server 120 outputs a session exit notification as media data (voice data). In FIG. 5, "server" is denoted with abbreviation "SV."

The call control server 110 receives a session exit request from the radio communication terminal 20 (S120). While the call control server 110 responds to the radio communication server 20 with a session exit response (S130), it also acquires information on the exiting member from the group session from the message presenting the session exit request, and notifies the media control server 120 (S141).

The media control server 120 receives from the call control server 110 the information on the exiting member from the session. Then, the media control server 120 transmits to the group list management server 130 an acquire request for information on the exiting member as a group member (S142).

The group list management server 130, upon receiving the acquire request for information on the group member, finds information on the group member exiting the session from within the group attributes data and responds to the media control server 120 (S143).

The media control server 120 receives the information on the group member responded from the group list management server 130. The media control server 120 confirms whether media data corresponding to the acquired information on the group member are stored or not, and responds to the call control server 110 with the information on the exiting member from the group session (S144).

The media control server 120 also reads out the media data corresponding to the acquired information on the group member from a built-in memory or an externally attached memory device, and distributes this media data M130 (voice data) as a session exit notification to the radio communication terminals 10 and 30 who are the current participants of the group session. For example, the media control server 120 distributes to the radio communication terminals 10 and 30, the current participants of the group session, such voice data as "The user Mr. B of the radio communication terminal 20 has exited the session" as a session exit notification (M130).

Now, the explanation continues with FIG. 3 again.

As the radio communication terminal 20 has exited the session, the voice signal that is input to the radio communication terminal 10 is transformed to voice data M140 and transmitted only to the radio communication terminal 30.

As is explained above, since the group voice communication system according to the present embodiment uses voice data as the media data for notifying other participants with presence information indicating increase and decrease of the number of the participants of the session, the participants are able to recognize "join" and "exit" of other members without a visual means. Therefore, since the communication system uses voice data as the media data, the participants are able to recognize "join" and "exit" of other participants without passing over such information.

And, since a server within the group voice communication system 100 manages media data, information management at the radio communication terminals can be simplified.

And, since a server within the group voice communication system 100 manages media data, media data for the radio communication terminals joining the group session can be distributed simultaneously.

Furthermore, as is described above, since the manager of the group stores the media data themselves (voice data) in the media control server 120, i.e., the manager of the group manages the content of the media data, it is possible to prevent any false content from being registered as media data. In other words, if the user of each radio communication terminal individually registers media data, then registration under a false name is possible, and there may be a danger that newly joining members to the group session or exiting members from the group session cannot be identified. However, in the group voice communication system according to the present embodiment, there exists no such danger.

And, since a radio communication terminal can join the group session by responding to the call from the inviting member, uninvited ones never join the group session.

Further, the above embodiment is a preferred example of the present invention, and the present invention is not limited to this embodiment.

In the above embodiment, a case is explained where the media control server 120 distributes media data in the group attributes data without any modification. However, the media control server 120 can modify and distribute the media data in the group attributes data (e.g., unify the form of expression or adjust the replay time).

And, in the above embodiment, a case is described as an example where the radio communication terminals perform voice group session each other, but the present invention can be applied as far as the group session is run including at least voice communication. In this case, the media data should include at least voice, and in addition to voice the media data may include moving pictures, still pictures, texts, etc.

And, when the present invention is applied to a case where only the manager of the group is able to recognize the participants of the group session, the participants are unable to identify newly joining members or exiting members, and media data (e.g., melody, etc.') only identifiable by the manager of the group may be used.

And a communication terminal for group session communication is not necessarily a radio communication terminal, but may be a communication terminal connected to the network with wire.

And, in the above embodiment, a case is explained where the group voice communication system is implemented with hardware such as servers, etc. However, the present invention is realizable using programs which can implement the functions of these servers 110 through 140.

In this way, the present invention allows various modifications.

The previous description of embodiment is provided to enable a person skilled in the art to make and use the present invention. Moreover, various modifications to this embodiment will be readily apparent to those skilled in the art, and the generic principles and specific examples defined herein may be applied to other embodiments without the use of inventive faculty. Therefore, the present invention is not intended to be limited to the embodiment described herein but is to be accorded with the widest scope as defined by the limitations of the claims and equivalents.

Further, it is noted that the inventor's intent is to refrain all equivalents of the claimed invention even if the claims are amended during prosecution.

## Claims

1. A group session management equipment comprising:
a request accepting means for accepting a request from a communication terminal connected to a network for joining or exiting a group session communication; and
a voice data distributing means for distributing voice data information on the communication terminal, that has requested for joining or exiting the group session communication, to all communication terminals participating the group session communication.

2. The group session management equipment according to claim 1, wherein said request accepting means comprising:
a call control server that accepts said request from said communication terminal for joining or exiting said group session communication, and transmits information on said communication terminal to said voice data distributing means, and
wherein said voice data distributing means comprising:
a media control server that receives said information on said communication terminal transmitted from said control server, extracts media data, from a memory means, corresponding to said communication terminal, and distributes said media data, as voice data, to all communication terminals participating said group session communication .

3. The group session management equipment according to claim 2, wherein said voice data distributing means further comprising:
a group list management server that manages group member information on each of group members relating to said group session communication, and outputs said group member information corresponding to said information on said communication terminal that has been received by said media control server, and
wherein said media control server said extracts media data based on said group member information output from said group list management server.

4. The group session management equipment according to claim 2, wherein said media data corresponding to each of communication terminals are pre-stored in said memory means by a manager of a group.

5. A communication system for providing a group session communication among communication terminals connected to a network comprising:
a predetermined number of communication terminals, as group members, for organizing a group of said group session communication;
a call control server that accepts a request from each of said group members for joining or exiting said group session communication; and
a media control server that distributes voice data information on each of said group members, that has requested for joining or exiting said group session communication, to all group members participating said group session communication,
wherein, when said call control server has accepted a request from one of said group members for joining or exiting said group session communication, said call control server transmits information on said group member to said media control server, and said media control server extracts media data, from a memory means, corresponding to said information on said group member, for distributing said media data as voice data.

6. The communication system according to claim 5 further comprising a group list management server that manages group member information on each of said group members, and
wherein, when said media control server extracts said media data, said media control server refers to said group member information that is managed by said group list management server and is corresponding to said information on said group member transmitted from said call control server.

7. A method for providing a group session communication among communication terminals connected to a network comprising:
an establishing step for establishing a group session communication among communication terminals defined as group members;
an accepting step for accepting a request from each of said communication terminals for joining or exiting said group session communication;
an extracting step for extracting media data, from a memory means, corresponding to information on each of said communication terminal that said request for joining or exiting said group session communication has been accepted; and
a distributing step for distributing said media data as voice data information to all communication terminals participating said group session communication.

8. wherein said accepting step further comprising a transmitting step for transmitting information on said communication terminal that said request for joining or exiting said group session communication has been accepted; and
wherein said extracting step further comprising a referring step for referring to group member information, that is separately managed in association with information on each of said communication terminals, for extracting said media data by using said information on said communication terminal transmitted in said transmitting step.
